# EUROPEAN PATENT SPECIFICATION

(11) **EP 2 626 811 B1**
(45) Date of publication and mention of the grant of the patent: **05.04.2017**
(21) Application number: 12154557.8
(22) Date of filing: 08.02.2012
(51) Int. Cl.: G06K 7/10, H04W 52/02, H04B 5/00, H04M 1/725

(54) **Mobile communications device providing low power operating features for near field communication (NFC) and related methods**
Mobile Kommunikationsvorrichtung mit Funktionen zum Niedrigleistungsbetrieb von Nahfeldkommunikation (NFC) und zugehörige Verfahren
Dispositif de communication mobile fournissant des caractéristiques de fonctionnement basse consommation de communication de champ proche (nfc) et procédés associés

(43) Date of publication of application: 14.08.2013
(73) Proprietor: BlackBerry Limited, Waterloo, ON N2K 0A7 (CA)
(72) Inventor: Moosavi, Vahid, Waterloo, Ontario N2L 3W8 (CA)
(74) Representative: Fennell, Gareth Charles

(56) References cited:
- EP-A1- 1 973 055
- GB-A- 2 443 234

## Description

### Technical Field

This application relates to the field of communications, and more particularly, to electronic devices and related methods that use near field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

GB 2443234 discloses a near field RF communicator which has an inductive coupler and a first signal provider to cause the inductive coupler to provide a first signal that when inductively coupled to the inductive coupler of another near field RF communicator is insufficient to cause initiation of communication with that other near field RF communicator. A sensor senses a change in an impedance of the inductive coupler due to inductive coupling of the first signal between the inductive couplers of the near field RF communicator and another near field RF communicator in near field range. A controller determines whether or not another near field RF communicator is in near field range on the basis of any change in impedance sensed by the sensor. If another near field RF communicator is determined to be in near field range, the controller causes a second signal to be inductively coupled to the other near field RF communicator to initiate communication between the two near field RF communicators. The sensor may use a phase detector to enable a change in impedance to be sensed by detecting a change in a current-voltage phase relationship resulting from a change in impedance.

### Brief Description of the Drawings

FIG. 1 is a schematic block diagram of a mobile communications device and associated mobile device accessory in accordance with one example aspect.
FIG. 2 is a schematic block diagram of the mobile communications device of FIG. 1 in accordance with another example aspect.
FIG. 3 is a schematic block diagram of an alternative embodiment of the mobile communications device and mobile device accessory of FIG. 1.
FIGS. 4 and 5 are flow diagrams illustrating example method aspects in accordance with example embodiments.
FIG. 6 is a schematic diagram illustrating example components that may be used with the mobile communications devices of FIGS. 1 or 2.

### Detailed Description

The present description is made with reference to the accompanying drawings, in which example embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in different embodiments.

Generally speaking, a system is provided herein which may include a mobile communications device including a near field communication (NFC) transceiver capable of operating in a first mode and a second mode, where the NFC transceiver may have a load threshold level associated therewith. The system may further include a controller coupled with the NFC transceiver. The controller may be capable of switching the NFC transceiver to the first mode when a load detected by the NFC transceiver is below the load threshold level, and switching the NFC transceiver to the second mode when the load detected by the NFC transceiver reaches the load threshold level. The system may also include a mobile device accessory. The mobile device accessory may include at least one conductor positioned to cause the load detected by the NFC transceiver to reach the load threshold level when the mobile device accessory is proximate to the mobile communications device. As such, the system advantageously provides for enhanced power savings by allowing operation in the low power tag detect mode with reduced instances of false positives that may cause switching to the active mode.

More particularly, the mobile communications device may further include a photodetector coupled with the controller. As such, the controller may be capable of switching the transceiver to the second mode when the load detected by the NFC transceiver reaches the load threshold level and when the photodetector indicates an ambient light level below a threshold light level. Similarly, the mobile communications device may further include a proximity detector coupled with the controller, and the controller may be capable of switching the transceiver to the second mode when the load detected by the NFC transceiver reaches the load threshold level and further based upon the proximity detector.

By way of example, the first mode may include an active mode, a peer-to-peer (P2P) mode, a read/write (R/W) mode, etc. Also by way of example, the second mode may include a low power tag detect mode. Additionally, the mobile device accessory may include a mobile device holster. In another example, the mobile device accessory may include a mobile device cradle.

A related mobile wireless communications device, and a related method for a mobile communications device, such as the one described briefly above, are also provided. The method may include switching the NFC transceiver to the first mode when a load detected by the NFC transceiver is below the load threshold level, and switching the NFC transceiver to the second mode when the load detected by the NFC transceiver reaches the load threshold level.

A related computer-readable medium for a mobile communications device, such as the one described briefly above, is also provided. The computer-readable medium may have computer-executable instructions for causing the mobile communications device to performs steps including switching the NFC transceiver to the first mode when a load detected by the NFC transceiver is below the load threshold level, and switching the NFC transceiver to the second mode when the load detected by the NFC transceiver reaches the load threshold level.

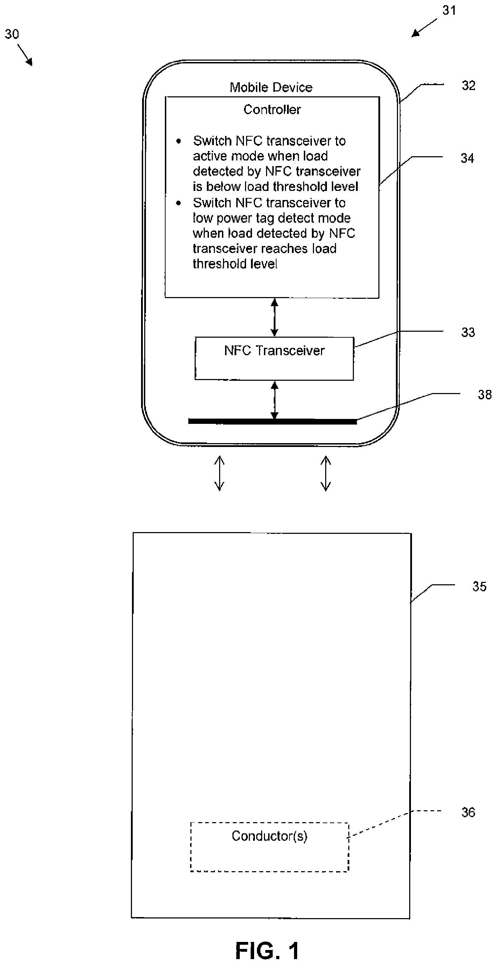

Referring initially to FIG. 1, a communications system **30** illustratively includes a mobile communications device **31** (also referred to as a "mobile device" herein) which includes a housing **32**, a near field communication (NFC) transceiver **33** and associated NFC antenna **38**, and a NFC controller **34** coupled with the NFC transceiver **33**. By way of example, the NFC transceiver **33**, the controller **34**, and the antenna **38** may be implemented as part of an NFC chipset further including an embedded memory, which may be configured as a secure element, along with associated computer-executable instructions. The controller **34** may be implemented using a combination of hardware (e.g., microprocessor, etc.) and a computer-readable medium having computer-executable instructions for performing the various operations noted herein. Example mobile devices **31** may include portable or personal media players (e.g., music or MP3 players, video players, electronic book readers, etc.), portable gaming devices, portable or mobile telephones, smartphones, portable computers such as tablet computers and laptop computers, digital cameras, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

Moreover, the NFC transceiver **33** may be operable in an active mode, such as a peer-to-peer (P2P) mode or a read/write (R/W) mode, for example. In these active modes, the NFC transceiver **33** may generate electromagnetic carrier field pulses for detecting and communicating with other types of NFC devices. However, when operating in such active modes, the NFC transceiver **33** may consume a significant amount of power (e.g., approximately several milliamps per second), which may lead to reduced battery life for the mobile device **31**. As such, while this power consumption might be acceptable for short durations when the NFC transceiver **33** is actively communicating, it may be desirable to switch the NFC device to a low power mode when NFC communication is not in use.

To this end, the NFC transceiver **33** may be operated in a NFC low power tag detect mode or a card emulation (CE) mode. In the CE mode, the NFC transceiver **33** operates as a passive device, meaning it does not emit electromagnetic field pulses but instead waits for a field from a reader device, thus emulating an unpowered NFC card when it is swiped with a reader. In some embodiments, the NFC transceiver **33** may cycle between R/W, P2P, and CE modes when it is awakened or activated to scan for (or be scanned by) another NFC device, such as upon being "awakened" from the low power tag detect mode.

In the low power tag detect mode, the NFC transceiver 33 may emit electromagnetic carrier field pulses, but of a relatively shorter duration (or frequency) than in the above-noted P2P or R/W modes, to detect a load change. That is, rather than attempting to engage in near field communication, which would involve longer duration active mode pulses, for example, the NFC transceiver **33** instead emits the shorter pulses for the purpose of determining relative movement with respect to objects in its vicinity. That is, metal or other materials will result in a given load measurement or reading by the NFC transceiver **33** when it enters a low power tag detect mode. Yet, when the NFC transceiver **33** and the surrounding object(s) are moved relative to one another, then the given load measurement will change. So, for example, if this measurement changes beyond a threshold level, then the NFC transceiver **33** may determine that the mobile device **31** has been moved, which may in some circumstances be indicative that NFC communication is desired, and thus the NFC transceiver **33** may be awakened to scan for other NFC device in an active mode.

In the low power tag detect mode, the NFC transceiver **33** may have a significantly lower power consumption than when operating in one of the above-noted active modes. For example, in a low power tag detect mode, the NFC transceiver **33** may have a power consumption (e.g., current draw) in the micro amp range (e.g., approximately 15-150 µA).

As noted above, when in a low power tag detect mode, NFC transceivers are typically configured to automatically switch to an active mode (e.g., P2P or R/W) as soon as soon as a load change is detected. However, a problem associated with such configurations is that a low power tag detect mode may result in numerous false positives. For example, if the mobile device **31** were resting on a countertop with car keys close by, when the car keys are picked up, the NFC transceiver **33** would detect or determine that the load had changed. Yet, since the mobile device **31** had not moved, there would likely be no reason to initiate NFC communication, and therefore no reason to switch the NFC transceiver **33** from the low power tag detect mode to an active mode.

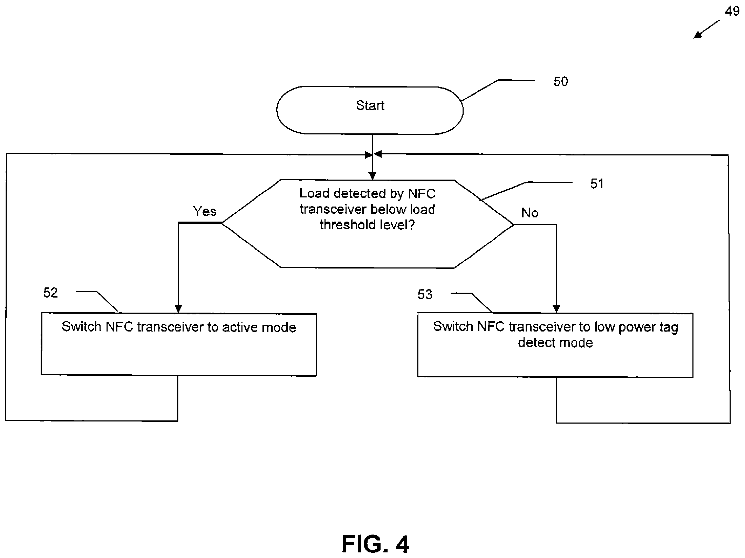

Referring additionally to the flow diagram **49** of FIG. 4, the mobile device **31** may be capable of taking advantage of low power tag detect mode power savings, while reducing incidences of false positives that would cause the NFC transceiver **33** to undesirably switch to an active mode. In particular, beginning at Block **50**, the controller **34** may be capable of or configured to switch the NFC transceiver **33** to an active mode (e.g., P2P or R/W) when a load detected by the NFC transceiver **33** is below a load threshold level, at Blocks **51-52**, and to switch the NFC transceiver **33** to the low power tag detect mode when the load detected by the NFC transceiver **33** reaches the load threshold level, at Block **53**. This is, the NFC transceiver **33** remains in the low power tag detect mode as long as the NFC transceiver **33** is at the load threshold level.

More specifically, a receiver or indicator is said to be "saturated" when the maximum load threshold limit of its power output has been reached. Thus, a radio signal which exceeds a certain power level fixed by the design of the receiver will cause the receiver to saturate. The maximum load or saturation of the NFC transceiver **33** may be accomplished using a mobile device accessory that is capable of or configured for attachment with the mobile device **31**. In particular, one or more conductors may be positioned in or on the accessory to cause the load detected by the NFC transceiver **33** to reach the load threshold level when the mobile device accessory is attached with the mobile communications device. In some embodiments, the NFC transceiver **33** may detect the conductor(s) when the mobile communications device is proximate to the mobile device accessory, for example, when the mobile communications device is being attached to the mobile device accessory.

In the example of FIG. 1, the accessory shown is a holster **35** for the mobile device **31**, which includes one or more conductors **36** (e.g., metal) carried by the holster **35** such that when the mobile device **31** is positioned in the holster **35**, the conductor(s) **36** overlaps the NFC antenna **38** associated with the NFC transceiver **33**. Through such positioning of the conductor **36**, this may advantageously result in a maximum load from the pulses emitted by the NFC transceiver **33** when operating in the low power tag detect mode. As such, this helps ensure that there will be no false positives once the mobile device **31** is inserted or positioned in the holster **35**. For example, a hand, keys, or other objects coming in close proximity to the mobile device **31** will have no effect on the load measurements by the NFC transceiver **33**, as it will already be at the load threshold level.

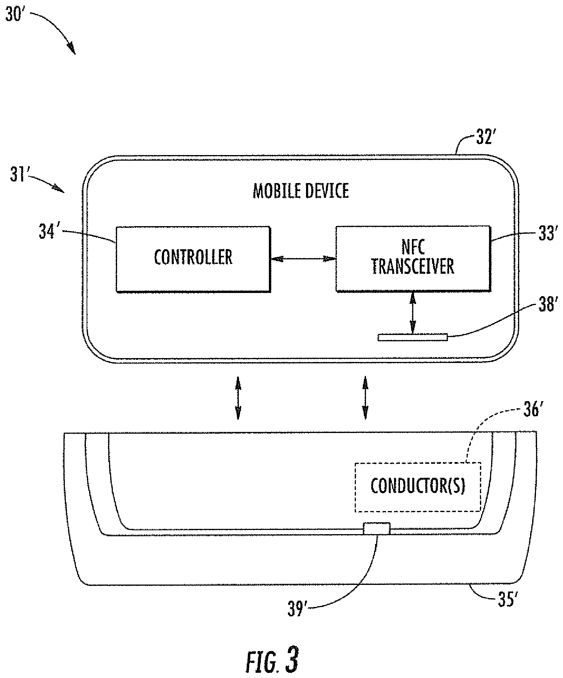

Another example mobile device accessory which may be used for triggering a low power tag detect mode is shown in FIG. 3. Here, the mobile device accessory includes a mobile device charger **35'**, in which one or more conductors **36'** are similarly carried by the charger **35'** so that their position corresponds with or overlaps the NFC antenna **38'** of the mobile device **32'** when the mobile device **32'** is positioned in the charger **35'.** In the illustrated example, a connection point **39'** (e.g., USB, micro-USB, etc.), such as a plug or contact(s), is used to plug into the mobile device **31'** to provide power for charging a battery of the mobile device **31'** (not shown), and in some embodiments for providing signal connection between the controller **34'** and a computer or other device for file synchronization, etc. Example chargers **35'** may include cradles, pods, docks, docking stations, charging pads, etc. Other examples of mobile device accessories that may be used in different embodiments include screen covers (such as for tablet computers), device skins, moisture covers, etc.

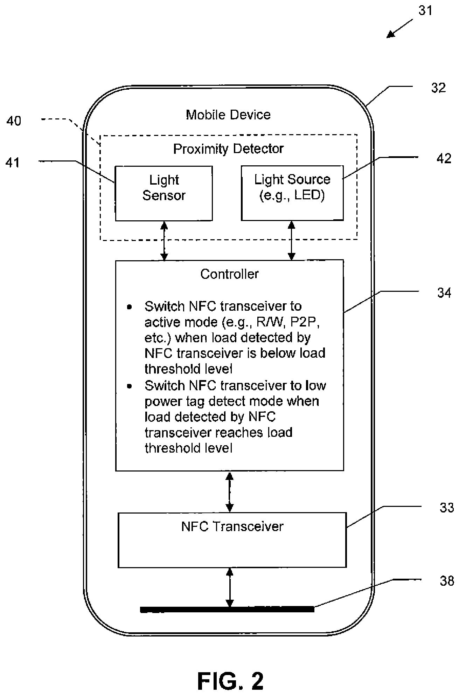

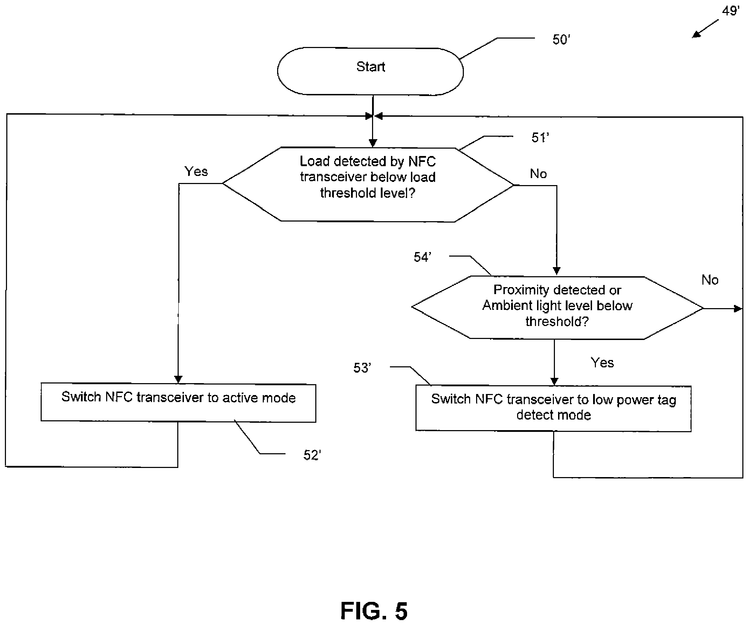

Referring additionally to FIGS. 2 and 5, the mobile device **31** may further include a proximity detector **40** coupled with the controller **34** (e.g., the controller **34** and proximity detector **40** may both communicate with a baseband processor). In the illustrated example, the proximity detector **40** includes a photodetector **41** and an associated light source **42**, such as a light emitting diode (LED). In accordance with one example embodiment, the proximity detector **40** may be triggered when the photodetector **41** detects light being emitted from the light source **42**, meaning that the light source **42** is covered by the mobile device accessory and reflecting light back to the light source **42**.

As such, the controller **34** may be capable of switching the NFC transceiver **33** to the low power tag detect mode when the load detected by the NFC transceiver **33** reaches the load threshold level and when the proximity detector **40** indicates proximity to an object (i.e., the mobile device accessory), at Blocks **53'-54'.** That is, the decision to switch to the low power tag detect mode may be based not only on the detection by the NFC transceiver **33** of the load reaching the load threshold level, but also based upon proximity of the mobile device accessory. Accordingly, this may help ensure that a brief exposure of the mobile device **31** to a metal object, for example, does not inadvertently cause the NFC transceiver to be switched to the low power tag detect mode.

In accordance with another similar aspect, the decision to switch to the low power tag detect mode may also be based upon an ambient light level detected by the light senor **41**. More particularly, if the load detected by the NFC transceiver **33** reaches the load threshold level and the ambient light detected is below a threshold light level, then the NFC transceiver **33** may be switched to the low power tag detect mode. More particularly, when coupled or attached with a mobile device accessory such as the holder **35**, or placed in a pocket or pocketbook with a conductor, the photodetector **40** may be completely or partially covered, which would decrease the ambient light measured by the photodetector **41** below the threshold light level. As such, as with the proximity sensor **40**, the photodetector **41** may advantageously provide another level of verification that the mobile device accessory is attached or coupled with the mobile device **31** before entering the low power tag detect mode. The steps illustrated at the remaining Blocks **50'-52'** of the flow diagram **49'** are similar to those described above.

In another example , the mobile communications
device includes a movement detecting device and the controller is capable of switching to the low power tag detect mode when the load detected by the NFC transceiver reaches the load threshold level and the movement detecting device indicates that the mobile communications device is being moved. The movement detecting device may include an accelerometer, a gyroscope, a magnetometer, a combination thereof, or the like.

In a further example , the proximity detector **40** may
including a sensor, such as for sensing skin, for example. Thus, similar to the photodetector **41** which may be used to help confirm positioning in a holster based upon the amount of light detected, as discussed above, a skin sensor may be used to help rule out that the mobile device **31** is in the hand of a user, for example. Accordingly, if it is determined that there is no skin in contact with the sensor, then the mobile device **31** may be considered as being in a holster, for example.

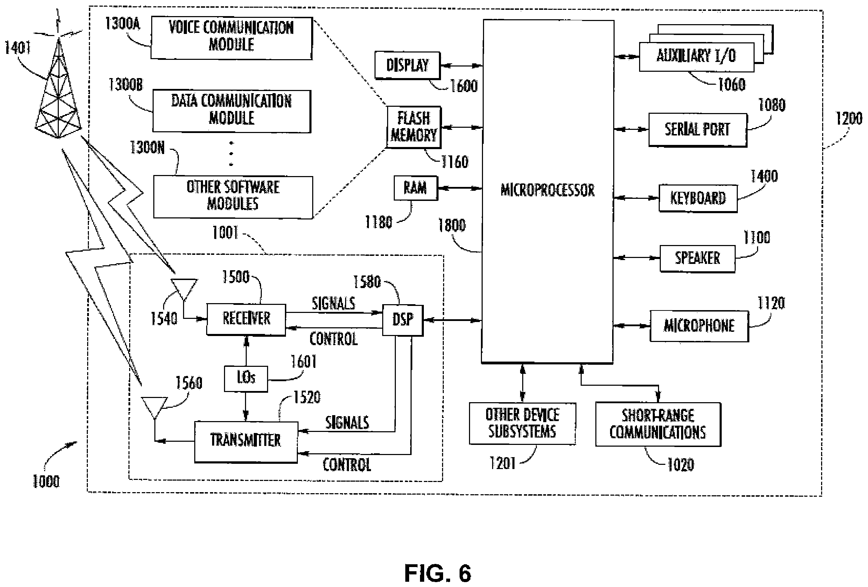

Example components of a mobile wireless communications device **1000** that may be used in accordance with the above-described embodiments are further described below with reference to FIG. 6. The device **1000** illustratively includes a housing 1200, an optional keyboard or keypad **1400** and an output device 1600. The output device shown is a display **1600**, which may include a full graphic LCD. In some embodiments, the display 1600 may have an array of touch sensors associated therewith to define a touch screen that may be used an input device. Various types of display technologies may be used, including three-dimensional (3D) displays, in some embodiments. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 6. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may include a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device **1000**. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, wireless local area network (WLAN) or WiFi, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a near field communications (NFC) communications module for communicating with a NFC device or NFC tag via NFC communications. Other short-range modules may includes a radio frequency identification (RFID) module, a TransferJet module, etc.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile communications device (31, 31') including:
a near field communication "NFC" transceiver (33, 33') capable of operating in a first mode and a second mode, the NFC transceiver being configured to consume less power in the second mode than in the first mode, the NFC transceiver having a load threshold level associated therewith; and
a controller (34, 34') coupled with the NFC transceiver, the controller being capable of
switching the NFC transceiver to the first mode when a load detected by the NFC transceiver is below the load threshold level, and
switching the NFC transceiver to the second mode when the load detected by the NFC transceiver reaches the load threshold level.

2. The mobile communications device of Claim 1 wherein the mobile communications device further includes a photodetector (41) coupled with the controller; and wherein the controller is capable of switching the NFC transceiver to the second mode when the load detected by the NFC transceiver reaches the load threshold level and when the photodetector indicates an ambient light level below a threshold light level.

3. The mobile communications device of Claim 1 wherein the mobile communications device further includes a proximity detector (40) coupled with the controller; and wherein the controller is capable of switching the transceiver to the second mode when the load detected by the NFC transceiver reaches the load threshold level and further based upon the proximity detector.

4. The mobile communications device of Claim 3 wherein the sensor comprises a sensor for sensing skin.

5. The mobile communications device of claim 1, wherein the first mode includes an active mode.

6. The mobile communications device of claim 1, wherein the second mode includes a low power tag detect mode.

7. The mobile communications device of Claim 1 wherein the first mode includes a peer-to-peer (P2P) mode.

8. The mobile communications device of Claim 1 wherein the first mode includes a read/write (R/W) mode.

9. The mobile communications device of Claim 1 further comprising a movement detecting device coupled with the controller; and wherein the controller is capable of switching to the low power tag detect mode when the load detected by the NFC transceiver reaches the load threshold level and the movement detecting device indicates that the mobile communications device is being moved.

10. A system (30, 30') including:
a mobile communications device as recited in Claim 1; and
a mobile device accessory (35, 35') including at least one conductor (36, 36') positioned to cause the load detected by the NFC transceiver to reach the load threshold level when the mobile device accessory is proximate to the mobile communications device.

11. A method for a mobile communications device (31, 31') including a near field communication "NFC" transceiver (33, 33') capable of operating in a first mode and a second mode, wherein the NFC transceiver is configured to consume less power in the second mode than in the first mode, the NFC transceiver having a load threshold level associated therewith, the method including:
switching the NFC transceiver to the first mode when a load detected by the NFC transceiver is below the load threshold level; and
switching the NFC transceiver to the second mode when the load detected by the NFC transceiver reaches the load threshold level.

12. The method of Claim 11 wherein the mobile communications device further includes a photodetector (41); and wherein switching the transceiver to the second mode further includes switching the transceiver to the second mode when the load detected by the NFC transceiver reaches the load threshold level and when the photodetector indicates an ambient light level below a threshold light level.

13. The method of Claim 11 wherein the mobile communications device further includes a proximity detector (40); and wherein switching the transceiver to the second mode further includes switching the transceiver to the second mode when the load detected by the NFC transceiver reaches the load threshold level and further based upon the proximity detector.

14. The method of Claim 11 wherein the first mode includes a peer-to-peer (P2P) mode; wherein the first mode includes a read/write (R/W) mode.

15. A computer readable medium having computer-executable instructions provided thereon for causing a mobile communications device to perform the method of any of claims 11-14.

## Patentansprüche

1. Mobile Kommunikationsvorrichtung (31, 31'), beinhaltend:
einen Nahfeldkommunikations (NFC)-Sendeempfänger (33, 33'), der in der Lage ist, in einem ersten Modus und einem zweiten Modus zu arbeiten, wobei der NFC-Sendeempfänger eingerichtet ist, weniger Leistung in dem zweiten Modus zu verbrauchen als in dem ersten Modus, wobei der NFC-Sendeempfänger einen damit verbundenen Lastgrenzwertpegel besitzt; und
einen mit dem NFC-Sendeempfänger gekoppelten Controller (34, 34'), wobei der Controller in der Lage ist
den NFC-Sendeempfänger in den ersten Modus zu schalten, wenn eine durch den NFC-Sendeempfänger detektierte Last unter dem Lastgrenzwertpegel ist, und
den NFC-Sendeempfänger in den zweiten Modus zu schalten, wenn die durch den NFC-Sendeempfänger detektierte Last den Lastgrenzwertpegel erreicht.

2. Mobile Kommunikationsvorrichtung nach Anspruch 1, wobei die mobile Kommunikationsvorrichtung ferner einen mit dem Controller gekoppelten Photodetektor (41) beinhaltet; und wobei der Controller in der Lage ist, den NFC-Sendeempfänger in den zweiten Modus zu schalten, wenn die durch den NFC-Sendeempfänger detektierte Last den Lastgrenzwertpegel erreicht und wenn der Photodetektor einen Umgebungslichtpegel unterhalb eines Grenzwertlichtpegels anzeigt.

3. Mobile Kommunikationsvorrichtung nach Anspruch 1, wobei die mobile Kommunikationsvorrichtung ferner einen mit dem Controller gekoppelten Näherungsdetektor (40) beinhaltet; und wobei der Controller in der Lage ist, den NFC-Sendeempfänger in den zweiten Modus zu schalten, wenn die durch den NFC-Sendeempfänger detektierte Last den Lastgrenzwertpegel erreicht und ferner basierend auf dem Näherungsdetektor.

4. Mobile Kommunikationsvorrichtung nach Anspruch 3, wobei der Sensor einen Sensor zum Sensieren von Haut aufweist.

5. Mobile Kommunikationsvorrichtung nach Anspruch 1, wobei der erste Modus einen aktiven Modus beinhaltet.

6. Mobile Kommunikationsvorrichtung nach Anspruch 1, wobei der zweite Modus einen Energiespar-"Tag-Detect"-Modus beinhaltet.

7. Mobile Kommunikationsvorrichtung nach Anspruch 1, wobei der erste Modus einen Peer-to-Peer (P2P)-Modus beinhaltet.

8. Mobile Kommunikationsvorrichtung nach Anspruch 1, wobei der erste Modus einen Lese-/Schreib(RW)-Modus beinhaltet.

9. Mobile Kommunikationsvorrichtung nach Anspruch 1, ferner aufweisend eine mit dem Controller gekoppelte Bewegungsdetektionsvorrichtung; und wobei der Controller in der Lage ist, in den Energiespar-"Tag-Detect"-Modus zu schalten, wenn die durch den NFC-Sendeempfänger detektierte Last den Lastgrenzwertpegel erreicht und die Bewegungsdetektionsvorrichtung anzeigt, dass die mobile Kommunikationsvorrichtung bewegt wird.

10. System (30, 30'), beinhaltend:
eine wie in Anspruch 1 angegebene mobile Kommunikationsvorrichtung; und
ein Zubehör der mobilen Vorrichtung (35, 35'), das zumindest einen Leiter (36, 36') beinhaltet, der positioniert ist, um die durch den NFC-Sendeempfänger detektierte Last zu veranlassen, den Lastgrenzwertpegel zu erreichen, wenn das Zubehör der mobilen Vorrichtung der mobilen Kommunikationsvorrichtung nahe ist.

11. Verfahren für eine mobile Kommunikationsvorrichtung (31, 31'), die einen Nahfeldkommunikations (NFC)-Sendeempfänger (33, 33') beinhaltet, der in der Lage ist, in einem ersten Modus und einem zweiten Modus zu arbeiten, wobei der NFC-Sendeempfänger eingerichtet ist, weniger Leistung in dem zweiten Modus zu verbrauchen als in dem ersten Modus, wobei der NFC-Sendeempfänger einen damit verbundenen Lastgrenzwertpegel besitzt; das Verfahren beinhaltend:
Schalten des NFC-Sendeempfängers in den ersten Modus, wenn eine durch den NFC-Sendeempfänger detektierte Last unterhalb des Lastgrenzwertpegels ist; und
Schalten des NFC-Sendeempfängers in den zweiten Modus, wenn eine durch den NFC-Sendeempfänger detektierte Last den Lastgrenzwertpegel erreicht.

12. Verfahren nach Anspruch 11, wobei die mobile Kommunikationsvorrichtung ferner einen Photodetektor beinhaltet; und wobei ein Schalten des NFC-Sendeempfängers in den zweiten Modus ferner ein Schalten des NFC-Sendeempfängers in den zweiten Modus beinhaltet, wenn eine durch den NFC-Sendeempfänger detektierte Last den Lastgrenzwertpegel erreicht und wenn der Photodetektor einen Umgebungslichtpegel unterhalb eines Grenzwertlichtpegels anzeigt.

13. Verfahren nach Anspruch 11, wobei die mobile Kommunikationsvorrichtung ferner einen Näherungsdetektor (40) beinhaltet; und wobei ein Schalten des NFC-Sendeempfängers in den zweiten Modus ferner ein Schalten des NFC-Sendeempfängers in den zweiten Modus beinhaltet, wenn eine durch den NFC-Sendeempfänger detektierte Last den Lastgrenzwertpegel erreicht und ferner basierend auf dem Näherungsdetektor.

14. Verfahren nach Anspruch 11, wobei der erste Modus einen Peer-to-Peer (P2P)-Modus beinhaltet; wobei der erste Modus einen Lese-/Schreib(RW)-Modus beinhaltet.

15. Computer-lesbares Medium mit darauf bereitgestellten computer-ausführbaren Befehlen zum Veranlassen einer mobilen Kommunikationsvorrichtung, das Verfahren nach einem der Ansprüche 11-14 durchzuführen.

## Revendications

1. Dispositif de communication mobile (31, 31') comprenant :
un émetteur-récepteur de communication en champ proche, NFC pour « *Near Field Communication* », (33, 33') en mesure de fonctionner dans un premier mode et dans un second mode, l'émetteur-récepteur NFC étant configuré pour consommer moins d'énergie dans le second mode que dans le premier mode, l'émetteur-récepteur NFC ayant un niveau de seuil de charge qui lui est associé ; et
un contrôleur (34, 34') couplé à l'émetteur-récepteur NFC, le contrôleur étant en mesure de :
commuter l'émetteur-récepteur NFC dans le premier mode lorsqu'une charge détectée par l'émetteur-récepteur NFC est inférieure au niveau de seuil de charge ; et
commuter l'émetteur-récepteur NFC dans le second mode lorsque la charge détectée par l'émetteur-récepteur NFC atteint le niveau de seuil de charge.

2. Dispositif de communication mobile selon la revendication 1, dans lequel le dispositif de communication mobile comprend en outre un photodétecteur (41) couplé au contrôleur ; et dans lequel le contrôleur est en mesure de commuter l'émetteur-récepteur NFC dans le second mode lorsque la charge détectée par l'émetteur-récepteur NFC atteint le niveau de seuil de charge et lorsque le photodétecteur indique un niveau de lumière ambiante inférieur à un seuil de niveau lumineux.

3. Dispositif de communication mobile selon la revendication 1, dans lequel le dispositif de communication mobile comprend en outre un détecteur de proximité (40) couplé au contrôleur ; et dans lequel le contrôleur est en mesure de commuter l'émetteur-récepteur dans le second mode lorsque la charge détectée par l'émetteur-récepteur NFC atteint le niveau de seuil de charge et, en outre, en fonction du détecteur de proximité.

4. Dispositif de communication mobile selon la revendication 3, dans lequel le capteur consiste en un capteur de détection de la peau.

5. Dispositif de communication mobile selon la revendication 1, dans lequel le premier mode inclut un mode actif.

6. Dispositif de communication mobile selon la revendication 1, dans lequel le second mode inclut un mode de détection de balises à faible consommation.

7. Dispositif de communication mobile selon la revendication 1, dans lequel le premier mode inclut un mode de communication entre homologues, P2P pour « *Peer to Peer* ».

8. Dispositif de communication mobile selon la revendication 1, dans lequel le premier mode inclut un mode de lecture/écriture.

9. Dispositif de communication mobile selon la revendication 1, comprenant en outre un dispositif de détection des mouvements couplé au contrôleur ; et dans lequel le contrôleur est en mesure de commuter dans le mode de détection de balises à faible consommation lorsque la charge détectée par l'émetteur-récepteur NFC atteint le niveau de seuil de charge et que le dispositif de détection de mouvements indique que le dispositif de communication mobile est déplacé.

10. Système (30, 30') comprenant :
un dispositif de communication mobile selon la revendication 1 ; et
un accessoire de dispositif mobile (35, 35') comprenant au moins un conducteur (36, 36') placé pour que la charge détectée par l'émetteur-récepteur NFC atteigne le niveau de seuil de charge lorsque l'accessoire de dispositif mobile est proche du dispositif de communication mobile.

11. Procédé destiné à un dispositif de communication mobile (31, 31') comprenant un émetteur-récepteur de communication en champ proche, NFC pour « *Near Field Communication* », (33, 33') en mesure de fonctionner dans un premier mode et dans un second mode, l'émetteur-récepteur NFC étant configuré pour consommer moins d'énergie dans le second mode que dans le premier mode, l'émetteur-récepteur NFC ayant un niveau de seuil de charge qui lui est associé, le procédé comprenant les étapes consistant à :
commuter l'émetteur-récepteur NFC dans le premier mode lorsqu'une charge détectée par l'émetteur-récepteur NFC est inférieure au niveau de seuil de charge ; et
commuter l'émetteur-récepteur NFC dans le second mode lorsque la charge détectée par l'émetteur-récepteur NFC atteint le niveau de seuil de charge.

12. Procédé selon la revendication 11, dans lequel le dispositif de communication mobile comprend en outre un photodétecteur (41) ; et dans lequel l'étape de commutation de l'émetteur-récepteur dans le second mode comprend en outre l'étape consistant à commuter l'émetteur-récepteur dans le second mode lorsque la charge détectée par l'émetteur-récepteur NFC atteint le niveau de seuil de charge et lorsque le photodétecteur indique un niveau de lumière ambiante inférieur à un seuil de niveau lumineux.

13. Procédé selon la revendication 11, dans lequel dans lequel le dispositif de communication mobile comprend en outre un détecteur de proximité (40) couplé au contrôleur ; et dans lequel l'étape de commutation de l'émetteur-récepteur dans le second mode comprend en outre l'étape consistant à commuter l'émetteur-récepteur dans le second mode lorsque la charge détectée par l'émetteur-récepteur NFC atteint le niveau de seuil de charge et, en outre, en fonction du détecteur de proximité.

14. Procédé selon la revendication 11, dans lequel le premier mode inclut un mode de communication entre homologues, P2P pour « *Peer to Peer* » ; dans lequel le premier mode inclut un mode de lecture/écriture.

15. Support lisible par ordinateur portant des instructions exécutables par ordinateur, destinées à commander à un dispositif de communication mobile d'exécuter le procédé selon l'une quelconque des revendications 11 à 14.
